# EUROPEAN PATENT APPLICATION

(11) **EP 2 436 856 A1**
(43) Date of publication of application: **04.04.2012**
(21) Application number: 11181466.1
(22) Date of filing: 15.09.2011
(51) Int. Cl.: E05B 47/02, E05B 47/06, E05B 17/20, F16B 7/14, H01F 7/124

(54) **Bolt mechanism**

(30) Priority: 30.09.2010 GB 1016401
(71) Applicant: Magnet Schultz Limited, High Street, Old Woking Woking Surrey GU22 9LD (GB)
(72) Inventor: Scates, David William, Old Woking, Surrey GU22 9LD (GB)
(74) Representative: Mansfield, Peter Turquand

(57) **Abstract**

A bolt mechanism comprises a tubular channel (20, 30, 32), a bolt (14, 34) slidable within the channel; and a bolt tip (40) that is axially displacable by the bolt (14, 34). The bolt tip (40) is attached to the bolt (14, 34) by a linking rod (35) allowing restricted axial play. The opposed end faces of the bolt (34) and of the bolt tip (40) define a gap that widens in the radial direction, and balls (50) in this gap. The wall of the tubular channel defines a groove (52) at the axial position corresponding to that of each ball (50) when the bolt tip (40) is in the locked position. This ensures that the bolt mechanism is deadlocked, as any effort to push the bolt tip (40) away from the locked position only urges the balls (50) more firmly into the groove (52).

## Description

This invention relates to a bolt mechanism to prevent unintentional or unauthorized displacement of a bolt.

A sliding bolt is a well-known device for securing an item, such as a door, in a desired position; such sliding bolt may be operated manually.

Electromagnetically operated bolts are also well-known, and may be referred to as shotbolts. These may be spring-loaded into the locked position, and driven into the unlocked position when an electromagnet or a solenoid is actuated. This arrangement ensures that in the absence of electrical power the bolt remains in the locked position. However, this has the potential disadvantage that the bolt is held in the locked position only by the spring loading. A simple and compact mechanism to ensure a sliding bolt cannot be pushed back would therefore be desirable.

According to the present invention there is provided a bolt mechanism comprising: a tubular channel defining a longitudinal axis; a bolt slidable within the channel; and a bolt tip that is axially displacable by the bolt; wherein the bolt tip is attached to the bolt by a linking rod allowing restricted axial play, and wherein opposed end faces of the bolt and of the bolt tip are each arranged to define a gap between the end faces that widens in the radial direction; and wherein balls are located between the opposed end faces; and wherein the wall of the tubular channel defines a recess at the axial position corresponding to that of each ball when the bolt tip is in a predetermined position.

The "predetermined position" is the position of the bolt tip after the bolt tip has been pushed along by the bolt, and is a position from which unintentional or unauthorized displacement of the bolt tip is to be prevented. It may therefore be referred to as a locked position. The bolt mechanism has the effect of a deadlock. When the bolt tip is pushed along by the bolt (in what may be referred to as the forward direction) into this predetermined or locked position, each ball is pushed outwardly by the inclined end face of the bolt and so projects into the recess in the wall of the tubular channel. The bolt tip is locked in this predetermined position, in that if the bolt tip is then pushed backwards away from this position, the inclined end face of the bolt tip pushes each ball in the radially outward direction, urging it more firmly in the recess and ensuring the bolt tip does not move. However when the bolt is pulled backwards by the bolt towards an unlocked position, the linking rod pulls the bolt tip, and the axial play ensures that the gap is wider, so each ball can move radially inwards, no longer projecting into the recess, and so allowing the bolt and bolt tip to move into an unlocked position.

The term "bolt" should be understood as encompassing any item that is intended to be slidable relative to a tubular channel, and so would encompass a telescopic strut which can be pulled out to a desired length, and then is held firmly in that position. The bolt itself may be solid, or tubular.

The invention hence provides simple and compact mechanism to ensure the sliding bolt cannot be pushed back from the predetermined or locked position. It is applicable in contexts where the bolt is spring-loaded into the locked position, and also in contexts where the bolt is actuated to move into the locked position. The actuation of the bolt may be manual or mechanical, for example electromechanical or hydraulic.

Preferably the bolt incorporates a peripheral restraint element projecting from the end face of the bolt to restrict axial movement of the adjacent ball, having at least a portion between the ball and the opposed face of the bolt tip, and this portion preferably defines a surface inclined in the same sense as the end face of the bolt. Consequently, as the bolt is pulled back, the inclined surface on this portion of the peripheral restraint element urges the ball radially inwards to ensure it does not project into the recess.

The opposed end faces may each be frustro-conical, and there may be several balls equally spaced around the resulting gap, for example between four and thirty such as six or eight. Larger mechanisms may use larger numbers of balls. As an alternative to the provision of a frustro-conical end face, means may be provided to constrain the balls to follow a path along a line inclined to the axis, for example following an inclined hole; this inclined path is equivalent to the path that the ball would have followed if the surface had been frustro-conical. Preferably the recess in the wall of the tubular channel extends all around the circumference, so that the radial position of the bolt does not affect operation. In one preferred embodiment the recess defines a surface portion that is parallel to the opposed portion of the face of the bolt tip, so that in the locked position the balls are located between surface portions that are parallel to each other.

The linking rod is preferably fixed at one end to one element (to either the bolt or the bolt tip), and extends through a hole into a cavity in the other element (in the bolt tip or the bolt respectively). Within the cavity the linking rod defines a head. The space between the axial faces of the head and the axial faces of the cavity determines the play in the linking rod.

Preferably the bolt is a shotbolt actuated by a solenoid, and it may be spring-loaded or actuated into the locked position. Preferably the bolt comprises an armature and an end cap fixed to the end of the armature, the end cap defining the requisite inclined end face and also providing the peripheral restraint element.

In some applications the axial movement of the bolt tip into the locked position may be limited by an external element that engages the bolt tip. In a preferred embodiment, however, the bolt mechanism incorporates a stop to limit axial movement of the bolt tip, so it cannot pass the locked position. For example the bolt tip may define a shoulder at an intermediate position along its length, and the tubular channel define a lip with which the shoulder engages when moved into the locked position, preventing further movement of the bolt tip in that direction.

The invention will now be further and more particularly described, by way of example only, and with reference to the accompanying drawings in which:
Figure 1 shows a side view of a bolt mechanism of the invention;
Figure 2 shows a longitudinal sectional view through the bolt mechanism on the line 2-2 of Figure 1;
Figure 3 shows a longitudinal sectional view of a locking ring of the bolt mechanism of Figure 1, shown in isolation; and
Figure 4 shows a longitudinal sectional view of a second tubular element of the bolt mechanism of Figure 1, shown in isolation.

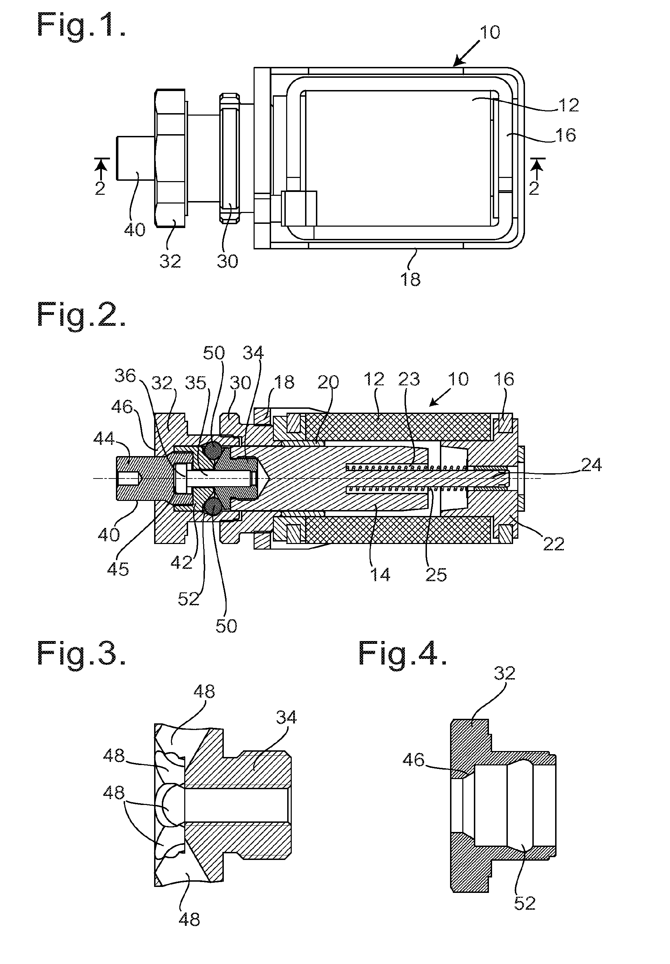

Referring to figure 1 there is shown a bolt mechanism 10 actuated by a solenoid 12 with a movable iron armature 14 (see figure 2; not shown in figure 1) and a rectangular external iron yoke 16 to complete the magnetic circuit. The solenoid 12, armature 14 and yoke 16 may be of conventional designs. An external rectangular frame 18 fits around the ends and two sides of the yoke 16.

Referring also to figure 2, the armature 14 is movable within the bore of the solenoid 12, sliding in a guide 20 of a plastic-based bearing material at an open end of the solenoid 12, and the other end of the solenoid 12 is closed by an end piece 22. The end of the armature 14 adjacent to the end piece 22 defines an annular recess 23 and a projecting axial rod 24. The axial rod 24 can slide through an axial hole in the end piece 22, to ensure the armature remains on the longitudinal axis of the bolt mechanism 10; and a compression spring 25 locating in the recess 23 and around the axial rod 24 pushes against the inner face of the end piece 22. When the solenoid 12 is activated by supplying an electric current, the armature 14 is pulled to the right (as shown) up against the end piece 22; when the electric current is switched off, the compression spring 25 pushes the armature 14 back to the position shown. The position as shown is referred to as the locked position. These features are conventional.

The bore of the guide 20 is effectively extended by a first tubular element 30 which is fixed by virtue of a screw thread into a corresponding aperture in the frame 18, so its bore is aligned with that of the guide 20.

The first tubular element 30 has a stepped bore to define a wider recess into which is fixed, by virtue of a screw thread, a second tubular element 32. Both the first tubular element 30 and the second tubular element 32 may be of a non-ferromagnetic material such as stainless steel. The bore of the second tubular element 32 defines a further extension to the bore of the first tubular element 30. The armature 14 can thus slide along a tube defined by the guide 20, the first tubular element 30, and the second tubular element 32; to ensure that the armature 14 slides freely, the bore of the first tubular element 30 and that of the second tubular element 32 are slightly larger than the diameter of the armature 14, typically by 40-50 microns. (In a modification, the guide 20 might instead be mounted within either the first tubular element or the second tubular element.)

The left-hand end (as shown) of the armature 14 defines a threaded recess into which is fixed a locking ring 34 whose outer surface is of slightly smaller diameter than the armature 14. A screw 35 with a head 36 is fixed to the left-hand face of the locking ring 34 and projects from it along the longitudinal axis. The bolt mechanism 10 also includes a hardened stainless steel bolt tip 40 which, in the locked position, partially projects beyond the end of the second tubular element 32. The bolt tip 40 is in two parts. A cap-shaped part 42 is of the same diameter as the armature 14, and defines a hole through which the shank of the screw 35 freely passes; a second part 44 is fixed by virtue of a screw thread into the cap-shaped part 42, and defines a cavity 45 in which the screw head 36 can freely move axially through a short distance determined by the difference between the axial length of the cavity 45 and the axial length the screw head 36. This provides some limited axial play between the locking ring 34 and the bolt tip 40. The second part 44 of the bolt tip 40 is of smaller diameter than the armature 14, so the junction between the cap-shaped part 42 and the second part 44 defines a shoulder, and in the locked position (as shown) this shoulder abuts a projecting lip 46 at the left-hand end (as shown) of the second tubular element 32.

The right-hand face (as shown) of the bolt tip 40, which is the face closest to the locking ring 34, is of frustro-conical shape with a cone angle of about 50°. Referring also to figure 3, the opposed portion of the locking ring 34 defines eight holes 48 in radial planes equally spaced around the axis, each hole 48 being inclined at 60° to the axis, and communicating with an axial recess. Within each hole 48 is a steel ball 50. As is clear in figure 2 each ball 50 is therefore in a gap between the opposed faces of the bolt tip 40 and of the locking ring 34, this gap becoming wider in the radial direction, and the width of the gap depending on the axial separation between the bolt tip 40 and the locking ring 34, which can vary by virtue of the play provided by the screw head 36 and the cavity 45. The bore of the second tubular element 32 defines a circumferential groove 52 which, in this example, is slightly asymmetrical, with a surface portion that is parallel to the frustro-conical face of the bolt tip 40, so that in the locked position the balls 50 are located between surfaces that are parallel to each other; this is shown more clearly in figure 4.

In the locked position, with the armature 14 being pushed to the left (as shown) by the spring 25, and the bolt tip 40 abutting the projecting lip 46 at the end of the second tubular element 32, the balls 50 are pushed outwardly due to their contact with both the conical face of the bolt tip 40, and the inclined hole in the locking ring 34. They therefore project outwardly into the groove 52. When the solenoid 12 is activated to unlock the bolt mechanism 10, the armature 14 is pulled into the bore of the solenoid 12. Because of the play between the locking ring 34 and the bolt tip 40, the gap between the locking ring 34 and the bolt tip 40 becomes wider. At the same time the inclined surface of each hole 48 at the left-hand (as shown) peripheral part of the locking ring 34 pushes the respective ball 50 radially inwards. Consequently the balls 50 move radially inwards, no longer projecting into the groove 52, and the armature 14 and bolt tip 40 are free to move to the right (as shown) into the unlocked position. That is in the case of normal operation.

In the locked position the bolt mechanism 10 is effectively deadlocked, because if pressure is exerted to push the bolt tip 40 towards the unlocked position, the inclined conical surface of the right-hand face of the bolt tip 40 urges the balls 50 outwards and even more firmly into the groove 52. Consequently the bolt tip 40 cannot be pushed into the unlocked position. The mechanism is compact, avoiding the need for any external items to deadlock the bolt. A further advantage is that the bolt mechanism 10 can readily be unlocked, by activating the solenoid 12, even when pressure is applied to the bolt tip 40. That is to say, the bolt mechanism 10 can be released when under load. The maximum load under which the bolt mechanism 10 can be released may be modified by changing the shape of the groove 52, and in particular the inclination of that portion of the groove 52 against which the balls 50 locate when in the locked position. It may also be modified by changing the inclination of the frustro-conical portion of the bolt tip 40.

It will be appreciated that the bolt mechanism 10 described above is shown by way of example only, and that it may be modified in various ways while remaining within the scope of the invention, which is as defined in the claims. For example the number of balls may be different from that described above; and the inclination of the opposed inclined surfaces may differ from that described above, although they are each preferably at a cone angle between 40° and 70°. The relative proportions of the slidable bolt and the bolt tip may differ from that described. For example the bolt tip may be of length similar to or greater than that of the slidable bolt, rather than being shorter as shown in figure 2. That would, for example, be appropriate in the case of a telescopic strut.

## Claims

1. A bolt mechanism comprising: a tubular channel defining a longitudinal axis; a bolt slidable within the channel; and a bolt tip that is axially displacable by the bolt; wherein the bolt tip is attached to the bolt by a linking rod allowing restricted axial play, and wherein opposed end faces of the bolt and of the bolt tip are each arranged to define a gap between the end faces that widens in the radial direction; and wherein balls are located between the opposed end faces; and wherein the wall of the tubular channel defines a recess at the axial position corresponding to that of each ball when the bolt tip is in a predetermined position.

2. A bolt mechanism as claimed in claim 1 wherein the bolt incorporates a peripheral restraint element projecting from the end face of the bolt to restrict axial movement of the adjacent ball, having at least a portion between the ball and the opposed face of the bolt tip.

3. A bolt mechanism as claimed in claim 2 wherein the portion of the peripheral restraint element between the ball and the opposed face of the bolt tip defines a surface inclined in the same sense as the end face of the bolt.

4. A bolt mechanism as claimed in any one of the preceding claims wherein at least one of the opposed end faces is frustro-conical.

5. A bolt mechanism as claimed in any one of the preceding claims wherein at least one of the opposed end faces comprises means to constrain each ball to follow a path along a line inclined to the longitudinal axis.

6. A bolt mechanism as claimed in any one of the preceding claims wherein there are between four and thirty balls between the opposed end faces.

7. A bolt mechanism as claimed in any one of the preceding claims wherein the recess in the wall of the tubular channel extends all around the circumference.

8. A bolt mechanism as claimed in any one of the preceding claims wherein, in axial cross-section, the recess defines a surface portion that is inclined to the longitudinal axis, so that when each ball is urged by the inclined surface of the bolt tip into the recess, the ball locates between an inclined surface of the bolt tip and an inclined surface of the groove.

9. A bolt mechanism as claimed in any one of the preceding claims wherein the linking rod is fixed at one end to either the bolt or the bolt tip, and extends through a hole into a cavity in the bolt tip or the bolt respectively, and defines a head locating within the cavity.

10. A bolt mechanism as claimed in any one of the preceding claims wherein the bolt is a shotbolt actuated by a solenoid.

11. A bolt mechanism as claimed in claim 10 wherein the bolt comprises an armature and an end cap fixed to the end of the armature, the end cap defining the requisite inclined end face and also providing the peripheral restraint element.

12. A bolt mechanism as claimed in any one of the preceding claims that also comprises a stop to limit axial movement of the bolt tip, to prevent it moving beyond the predetermined position.
